# DEMANDE DE BREVET EUROPEEN

(11) **EP 2 299 185 A2**
(43) Date de publication de la demande: **23.03.2011**
(21) Numéro de dépôt: 10305921.8
(22) Date de dépôt: 27.08.2010
(51) Int. Cl.: F24D 13/02, F24H 3/00, F24H 7/02

(54) **Radiateur électrique à accumulation et/ou à inertie**

(30) Priorité: 28.08.2009 FR 0955861; 09.10.2009 FR 0957057
(71) Demandeur: Société Financière Yves Judel, 67720 Hoerdt (FR)
(72) Inventeur: Judel, Yves, 67116 Reichstett (FR)
(74) Mandataire: Nuss, Laurent

(57) **Abrégé**

La présente invention a pour objet un radiateur électrique à accumulation et/ou à inertie, destiné au chauffage du local dans lequel il est disposé et comprenant, d'une part, au moins un corps creux profilé métallique (2) définissant au moins une chambre interne (3) allongée et, d'autre part, au moins un élément chauffant électrique (4) en contact intime avec une portion de paroi (2') dudit corps creux (2), sur une surface extérieure de ce dernier par rapport à la ou aux chambres (3).

Radiateur (1) **caractérisé en ce que** la chambre (3) ou au moins l'une des chambres (3) du ou de chaque corps creux profilé (2) renferme, en étant préférentiellement entièrement remplie, un matériau (5) pulvérulent ou particulaire, à capacité calorifique élevée, choisi dans le groupe formé par le sable siliceux (sable naturel, sable silico-argileux, sable à prise chimique), la poudre de gypse, la poudre de talc, la poudre d'une roche ultramafique et les mélanges de ces matériaux.

## Description

La présente invention concerne le domaine des équipements de chauffage, en particulier les appareils de chauffage électriques et a pour objet un radiateur électrique à accumulation et/ou à inertie.

On connaît déjà de nombreux dispositifs et appareils de chauffage à alimentation électrique, en particulier des radiateurs électriques, généralement accrochés aux murs et destinés à chauffer les locaux dans lesquels ils sont disposés par rayonnement (surtout au niveau de leur face avant) et par convection, l'air étant en contact direct avec leurs faces extérieures.

Ainsi, un premier type d'appareils connu se présente sous la forme de résistances à diffusion directe, tel que par exemple les panneaux radiants. Ces appareils ne présentent sensiblement aucune inertie thermique et permettent, par conséquent, un chauffage instantané en cas de mise en route. Toutefois, leur action chauffante cesse pratiquement à la coupure de l'alimentation puisqu'ils ne permettent aucune accumulation ou stockage calorique.

Un second type d'appareils connu se présente sous la forme de radiateurs à accumulation intégrant des briques ou des panneaux en un matériau à propriétés d'accumulation calorifique, tel que les matériaux réfractaires ou céramiques. Les éléments chauffants sont généralement noyés dans la masse des briques ou panneaux ou alors disposés entre des rangées adjacentes de briques ou de panneaux.

Néanmoins, ce second type d'appareils présente également un certain nombre d'inconvénients, à savoir une action chauffante différée dans le temps par rapport à leur alimentation, un poids très élevé et une température de surface non uniforme, avec des zones plus chaudes et des zones plus froides, en fonction de la localisation des briques ou panneaux dans l'appareil de chauffage.

Un troisième type d'appareils connu consiste en des radiateurs électriques à fluide caloporteur, dans lesquels un fluide circule dans des éléments creux profilés sur lesquels sont rapportées des résistances chauffantes au niveau de leurs faces extérieures. Le fluide peut, le cas échéant, circuler dans un circuit extérieur faisant partie d'un dispositif de chauffage central, les résistances chauffantes n'apportant alors qu'un complément calorique localement au niveau du radiateur concerné (voir par exemple FR-A-2 824 386).

Ce troisième type d'appareils permet d'aboutir à une action chauffante relativement rapidement après sa mise sous tension et présente également une certaine inertie thermique permettant le maintien d'une action chauffante après coupure de l'alimentation du fait des calories accumulées.

Toutefois, le pouvoir d'accumulation de ce troisième type d'appareils est limité, et par conséquent insuffisant pour une diffusion sur une période allongée en l'absence d'alimentation, et la présence de fluide caloporteur nécessite une étanchéité parfaite, sans pouvoir éliminer totalement les risques de fuite.

Enfin, un autre type de système de chauffage électrique connu, par exemple par le document EP-A-0 833 111, se présente sous la forme de planchers chauffants comprenant plusieurs éléments chauffants électriques noyés dans la dalle du plancher ou du sol et intégrant des résistances chauffantes, éventuellement entourées d'une gaine en un matériau minéral et reliées entre elles pour leur alimentation.

Toutefois, ce type de système de chauffage présente une inertie très importante et ne permet pas un chauffage rapide du volume du local. De plus, à la différence des radiateurs, les éléments chauffants de ces planchers chauffants ne sont pas en contact direct avec le volume du local à chauffer, notamment avec l'air de ce dernier, et l'implantation géographique de ces systèmes est, du fait de leur nature même, imposée.

La présente invention a pour but de proposer une solution permettant de surmonter les limitations des différents types d'appareils de chauffage précités et de fournir un appareil de chauffage électrique présentant, d'une part, une action chauffante significative dès sa mise sous tension et, d'autre part, une capacité d'accumulation et de stockage calorique supérieure aux radiateurs électriques à fluide caloporteur, voire sensiblement équivalente au second type d'appareils mentionné ci-dessus. En outre, ladite solution devrait permettre l'utilisation d'éléments de radiateurs électrique à fluide caloporteur, sans toutefois nécessiter une étanchéité aux fluides.

A cet effet, la présente invention a pour objet un radiateur électrique à accumulation, destiné au chauffage du local dans lequel il est disposé et comprenant, d'une part, au moins un corps creux profilé métallique définissant au moins une chambre interne allongée et, d'autre part, au moins un élément chauffant électrique en contact intime avec une portion de paroi dudit corps creux, sur une surface extérieure de ce dernier par rapport à la ou aux chambre(s), radiateur **caractérisé en ce que** la chambre ou au moins l'une des chambres du ou de chaque corps creux profilé renferme, en étant préférentiellement entièrement remplie, un matériau pulvérulent ou particulaire, à capacité calorifique élevée, choisi dans le groupe formé par le sable siliceux, la poudre de gypse, la poudre de talc, la poudre d'une roche ultramafique et les mélanges de ces matériaux.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une représentation schématique en coupe transversale d'un radiateur électrique à accumulation comprenant quatre corps creux profilés, pourvu chacun d'un élément chauffant électrique, selon un premier mode de réalisation de l'invention ;
La figure 2 est une représentation schématique en coupe transversale d'un radiateur électrique à accumulation comprenant deux corps creux profilés, pourvu chacun d'un élément chauffant électrique, selon un deuxième mode de réalisation de l'invention ;
La figure 3 est une représentation schématique en coupe transversale d'un corps creux profilé faisant partie d'un radiateur électrique à accumulation, selon un troisième mode de réalisation de l'invention (l'élément chauffant n'étant pas représenté) ;
Les figures 4, 5 et 6 sont des représentations schématiques en coupe transversale d'un corps creux profilé faisant partie d'un radiateur électrique à accumulation, selon trois variantes d'un quatrième mode de réalisation de l'invention ;
La figure 7 est une représentation schématique en coupe transversale d'un corps creux profilé faisant partie d'un radiateur électrique à accumulation, selon un cinquième mode de réalisation de l'invention ;
La figure 8 est une vue éclatée à une échelle agrandie d'une portion d'extrémité d'un ensemble [corps creux / élément chauffant] formant un module d'un radiateur électrique à accumulation selon un sixième mode de réalisation de l'invention, et,
Les figures 9A et 9B sont des vues en coupe de la section courante de l'ensemble représenté partiellement figure 8, à l'état éclaté (9A) et assemblé (9B).

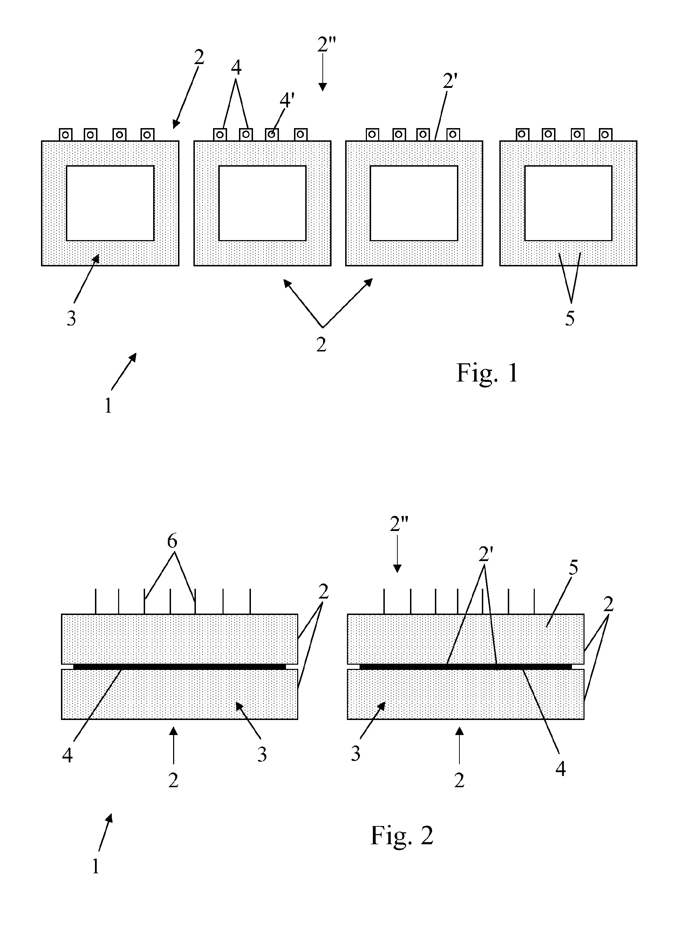

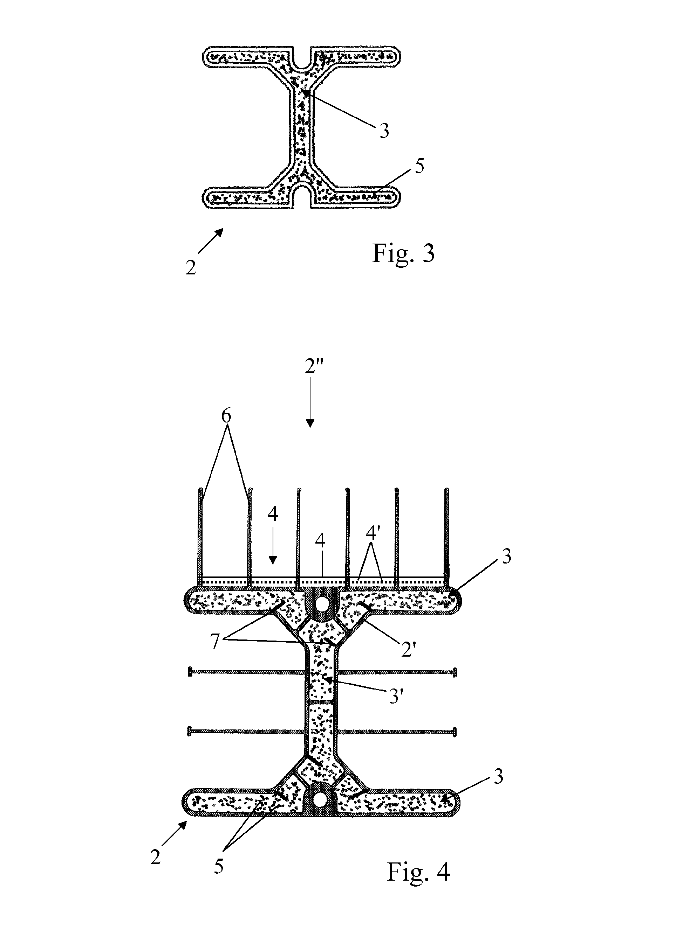

Les figures 1 et 2, et partiellement les figures 3 à 9, montrent un radiateur électrique 1 à accumulation, destiné au chauffage du local dans lequel il est disposé et comprenant, d'une part, au moins un corps creux profilé métallique 2 définissant au moins une chambre interne 3 allongée et, d'autre part, au moins un élément chauffant électrique 4 en contact intime avec une portion de paroi 2' dudit corps creux 2, sur une surface extérieure de ce dernier par rapport à la ou aux chambre(s) 3.

Conformément à l'invention, la chambre 3 ou au moins l'une des chambres 3, 3' du ou de chaque corps creux profilé 2 renferme, en étant préférentiellement entièrement remplie, un matériau 5 pulvérulent ou particulaire, à capacité calorifique élevée, choisi dans le groupe formé par le sable siliceux (par exemple sable naturel, sable silico-argileux, sable à prise chimique), la poudre de gypse, la poudre de talc, la poudre d'une roche ultramafique et les mélanges de ces matériaux.

Chaque ensemble [corps creux 2 / partie d'élément chauffant 4 commun ou élément chauffant 4 particulier associé] peut ainsi former un module chauffant constituant une partie du radiateur 1, ce dernier étant constitué par l'association de plusieurs tels modules, éventuellement préassemblés par paire.

Le matériau métallique formant les parois de chaque corps creux profilé 2 peut être de différents types pour autant qu'il présente une conduction thermique élevée permettant de réaliser une répartition du flux calorique généré par l'élément chauffant ou chaque élément chauffant 4 entre une première partie dissipée par rayonnement au niveau des faces externes du ou de chaque corps creux profilé 2 et une seconde partie transmise au matériau de remplissage 5 et absorbée par ce dernier pour être stockée, en vue d'une diffusion ultérieure après coupure de l'alimentation.

En accord avec un mode de réalisation préféré de l'invention, le corps creux profilé 2 est réalisé en aluminium ou en un alliage d'aluminium et le matériau 5 pulvérulent ou particulaire de remplissage est à base de sable siliceux ou de poudre de stéatite ou pierre ollaire, le cas échéant formé uniquement ou majoritairement de poudre de stéatite ou de sable siliceux.

Le choix particulier de ces deux matériaux permet, d'une part, de disposer d'un matériau métallique aisément extrudable, présentant une très bonne conduction thermique, relativement léger et peu coûteux et, d'autre part, de disposer d'un matériau de remplissage présentant des coefficients d'absorption et de restitution thermiques très élevés (en quantité, en durée et en vitesse), ne nécessitant pas une étanchéité fluidique et aisément manipulable.

Les grains ou particules du matériau 5 forment une masse compacte sous l'action de la pesanteur, les composantes particulaires étant en contact intime tout en n'étant pas liées entre elles.

Afin d'améliorer encore le transfert thermique entre le matériau de remplissage 5 et les parois du corps creux profilé 2, ainsi qu'entre les particules ou grains du matériau 5 lui-même, et simultanément de figer en totalité la structure du radiateur 1, il peut être prévu que les grains ou particules du matériau 5 de remplissage sont aggloméré(e)s entre eux (elles) au moyen d'un liant, de manière à former une structure de remplissage sensiblement monolithique dans la ou chaque chambre 3, 3' du ou de chaque corps creux profilé 2.

Le liant peut être intégré dans le matériau de remplissage 5 sous forme liquide ou pulvérulente, le mélange résultant devant être homogène et présenter une viscosité ou une granulométrie telle que la totalité du volume intérieur de la ou des chambre(s) 3 puisse être occupée par ce mélange. Ainsi, le matériau aggloméré résultant épouse complètement les contours du volume interne et est en contact surfacique intime avec les parois du corps creux 2 sur toute leur surface interne.

Avantageusement, le matériau de remplissage aggloméré 5 présente une composition homogène et une densité proche ou équivalente à celle de la roche naturelle dont proviennent les particules ou grains à capacité calorique élevée et le liant mis en oeuvre conserve une structure rigide au moins dans les plages de températures de fonctionnement du radiateur 1. La densité peut être ajustée en agissant par exemple sur le degré de tassement ou de compression du matériau pulvérulent 5 avant son agglomération et en tenant compte des caractéristiques du liant, ce dernier n'étant toutefois présent qu'en des proportions faibles (typiquement 5 % à 10 % pondéral).

Préférentiellement, le liant est un polymère thermodurcissable ou thermoplastique et est choisi dans le groupe formé par les polyesters, les polyoléfines, les polyuréthanes et les époxydes. Le liant peut également consister en un liant liquide assurant l'agglomération des particules du matériau 5 et la solidification en une structure monolithique après une phase de consolidation dudit liant, par exemple après évaporation du solvant, réticulation ou analogue.

En vue d'améliorer davantage encore les propriétés de transfert thermique du matériau de remplissage 5, il peut, en outre, être prévu que ce dernier, sous forme agglomérée ou non, intègre au moins un additif améliorant la conduction thermique sous la forme de particules ou de fibres métalliques, préférentiellement en un matériau identique au matériau métallique formant le ou chaque corps creux profilé 2 (c'est-à-dire par exemple de la poudre, des fibres, des copeaux ou des paillettes d'aluminium).

Généralement, mais non limitativement, le radiateur 1 est constitué par un arrangement de plusieurs corps creux profilés 2, éventuellement assemblés par paires, dont les deux extrémités sont fermées par des capots ou des couvercles 8 et l'élément chauffant commun ou chaque élément chauffant 4 réalise un chauffage surfacique au niveau des faces extérieures de certaines portions de paroi 2' des corps creux profilés 2, préférentiellement au niveau des faces arrières 2" desdits corps creux profilés 2, opposées aux faces des corps 2 tournées vers le local à chauffer.

L'élément chauffant 4 peut être commun à l'ensemble des corps creux profilés 2 du radiateur 1. De manière alternative et préférée toutefois, chaque corps creux profilé 2 peut comporter son ou ses propres éléments chauffants 4.

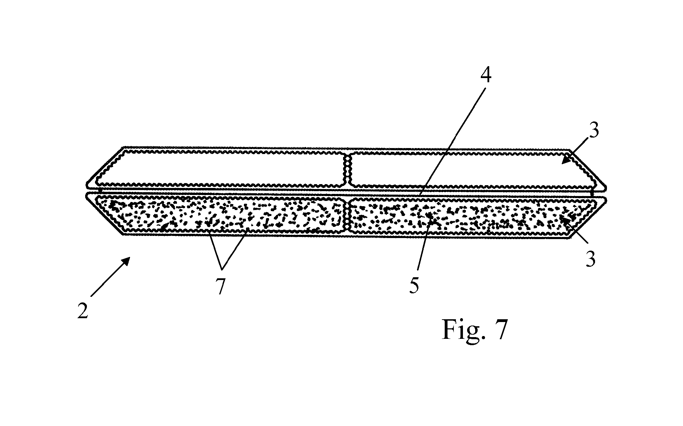

Ces éléments chauffants 4 peuvent soit être disposés sur une face du corps creux profilé 2 dirigé vers l'extérieur (voir figures 1 et 4 à 6), soit éventuellement être pris en sandwich entre deux parties d'un corps creux profilé délimitant chacune au moins une chambre 3, 3' (voir figures 2 et 7). Dans ce dernier cas, l'élément chauffant 4 présente avantageusement une structure aplatie, le cas échéant pelliculaire ou en forme de feuille.

Selon une première réalisation pratique avantageuse de l'invention, ressortant notamment des figures 4 à 6 des dessins annexés, l'élément chauffant commun 4 ou chaque élément chauffant 4 consiste en des bandelettes à résistances chauffantes intégrées 4', préférentiellement en matériau silicone et vulcanisées sur des portions de paroi 2' des corps creux profilés 2 et les faces arrières 2" des corps creux profilés 2 sont pourvues d'ailettes 6 orientées verticalement et entre lesquelles s'étendent lesdites bandelettes chauffantes 4 en étant en application intime contre les parois desdites faces 2". Des ailettes 6 latérales peuvent également être prévues.

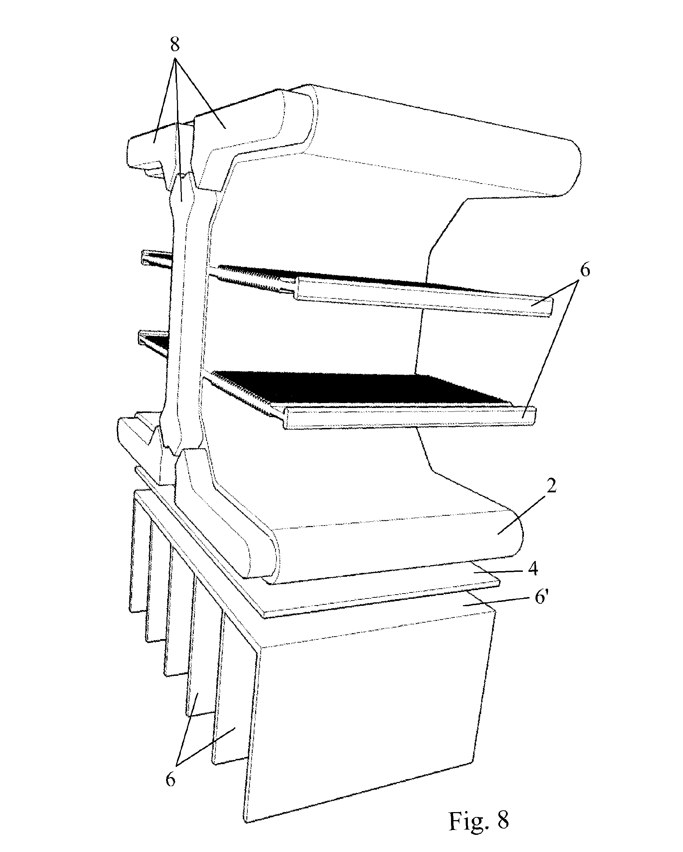

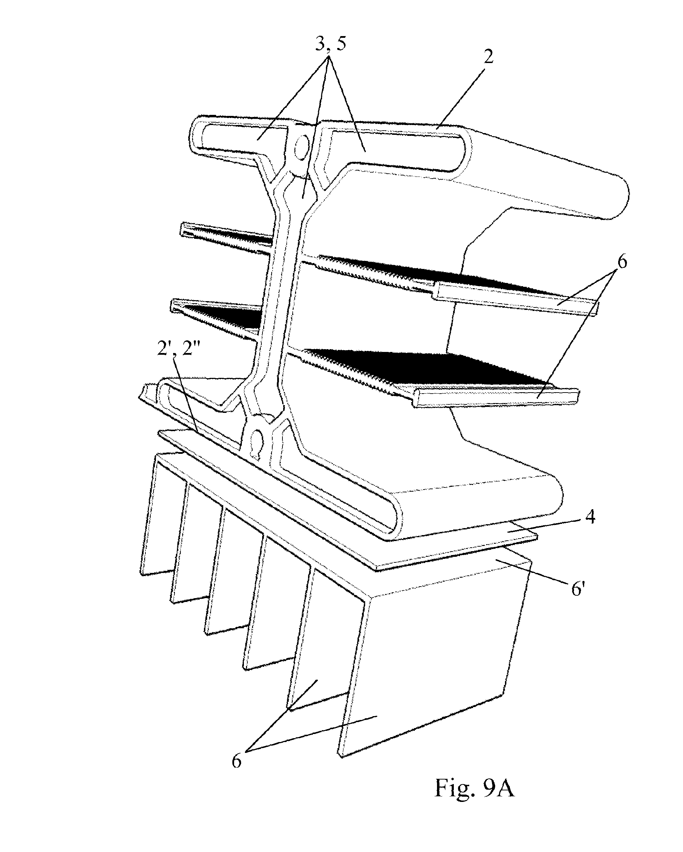

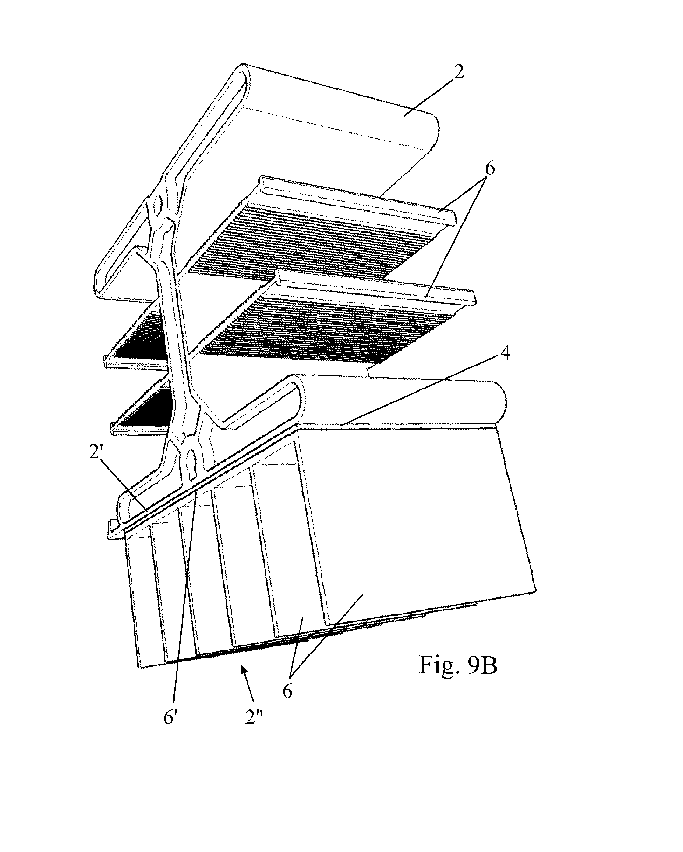

En accord avec une autre réalisation pratique avantageuse de l'invention, illustrée aux figures 8 et 9 des dessins annexés, chaque élément chauffant 4 associé à un corps creux 2 consiste en un corps chauffant surfacique, par exemple une plaque ou une bande de matériau isolant électrique, conducteur thermique et intégrant des résistances chauffantes 4', cette plaque étant prise en sandwich avec contact intime respectif entre la face extérieure d'une ou de la portion de paroi arrière 2' dudit corps creux 2 considéré et une plaque de diffusion thermique 6' pourvue d'ailettes 6, rapportée sur la face arrière 2" dudit corps 2.

Préférentiellement, les corps chauffants 4 peuvent consister en un circuit imprimé intégré dans une bande en silicone et dont la liaison avec la plaque 6' à ailettes 6 et la face 2' du corps creux 2 correspondant est réalisée au moyen d'une colle polymérisable ou réticulable à chaud.

Les deux variantes précitées permettent ainsi d'aboutir de manière performante et équilibrée à un mode de chauffage double, à savoir :
- un premier chauffage instantané (débutant lors de la prise sous tension) par convection et rayonnement au niveau des ailes 6 rapportées et/ou intégrées à chaque corps creux 2 et des diverses faces extérieures de ces derniers (la diffusion de la chaleur étant optimisée par la nature métallique des ailes 6 et des corps 2 et par le contact surfacique avec l'élément chauffant 4) ;
- un second chauffage différé dans le temps résultant de la libération de la chaleur accumulée dans le matériau de remplissage (par dérivation d'une partie de la chaleur diffusée dans les parois du corps creux profilé métallique 2 lorsque l'élément chauffant 4 est alimenté), cette libération progressive pouvant se prolonger dans le temps, longtemps après coupure de l'alimentation.

L'élément chauffant 4 étant en application extérieure sur le corps creux 2 (et non pas noyé dans le matériau de remplissage 5), le premier mode de chauffage est à effet pratiquement immédiat et sur une grande surface émettrice et d'échange, avec un transfert calorique par conduction optimisée sur la totalité de la surface extérieure et celle des ailettes 6.

En outre, le chauffage du matériau de remplissage 5 est réalisé de manière efficace et uniforme, le corps creux métallique 2 enveloppant ledit matériau en totalité et la segmentation de ce dernier par sa répartition dans plusieurs chambres rendant le transfert calorique encore plus efficace.

Comme le montrent les figures 1 et 3 des dessins annexés, chaque corps creux profilé 2, préférentiellement en forme de I ou de H vu en section, peut éventuellement comporter une unique chambre 3.

Toutefois, de manière préférée, et comme le montrent les figures 2 et 4 à 9, chaque corps creux profilé 2 comporte plusieurs chambres 3 et 3' situées à des distances différentes des faces avant et arrière dudit corps creux profilé 2, et éventuellement de formes et/ou de tailles différentes, à savoir au moins une chambre 3 périphérique délimitée partiellement par les portions de paroi 2' du corps creux profilé 2 définissant les faces extérieures de ce dernier, notamment avant et arrière, et au moins une chambre 3' interne séparée desdites faces extérieures, et notamment de la ou des portions de paroi 2' en contact avec l'élément ou un élément chauffant 4, par au moins une autre chambre 3.

Il est ainsi possible de créer plusieurs strates, niveaux ou réservoirs d'accumulation des calories, la segmentation de la section du corps creux profilé 2 en plusieurs chambres 3, 3' permettant une diffusion plus rapide de la chaleur vers les strates ou réservoirs internes par l'intermédiaire des ponts thermiques formés par des parois métalliques desdites chambres.

Conformément à une première alternative et comme le montrent les figures 2 et 4 des dessins annexés, toutes les chambres 3, 3' peut être remplies, sensiblement en totalité, par le matériau 5 pulvérulent ou particulaire de remplissage, le cas échéant aggloméré, les autres chambres étant vides ou renfermant un autre matériau de remplissage.

Conformément à une seconde alternative et comme le montrent les figures 4 à 7 des dessins annexés, il peut être prévu que seule(s) une ou certaines des chambres 3, 3' soient remplies, sensiblement en totalité, par le matériau 5 pulvérulent ou particulaire de remplissage, le cas échéant aggloméré.

En relation avec cette seconde alternative, il est possible, pour une forme de corps creux profilé 2 donnée, d'adapter les propriétés et performances du radiateur 1 comprenant de tels corps en modifiant le nombre, l'arrangement et la situation des chambres 3, 3' remplies avec le matériau 5.

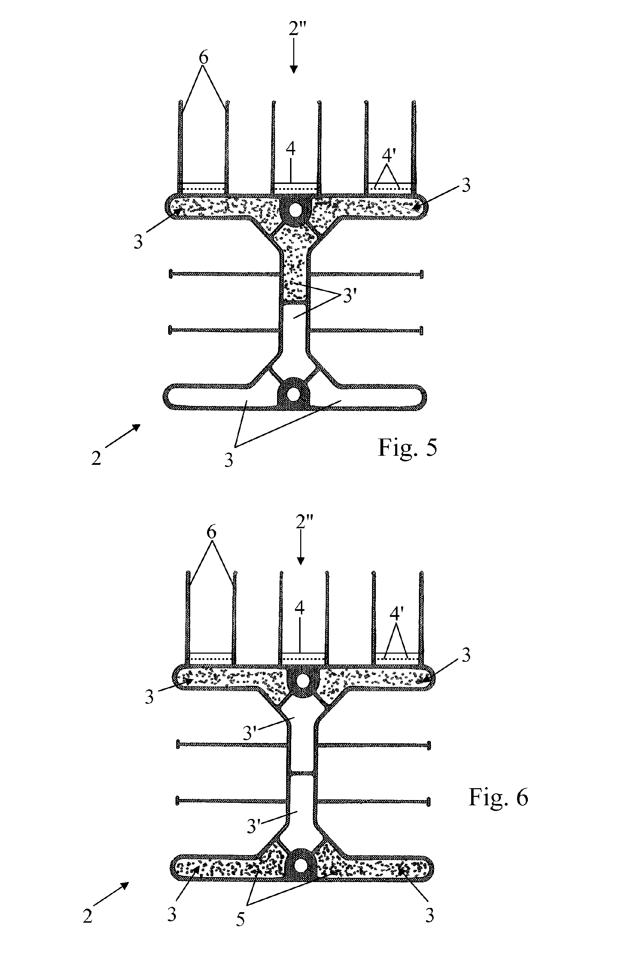

Ainsi, non seulement la quantité totale de calories accumulables peut être adaptée (en modifiant le nombre de chambres 3, 3' remplies), mais également le mode d'accumulation (rapide lorsque les chambres remplies sont à proximité immédiate de l'élément chauffant comme sur la figure 5 - plus lent lorsque les chambres remplies sont situées à distance de l'élément chauffant comme les chambres frontales sur la figure 6). Ces dispositions influencent également, de manière complémentaire, le chauffage immédiat par rayonnement lors de la mise sous tension du radiateur.

La ou les chambre(s) 3 remplie(s) du matériau 5, aggloméré ou non, peuvent être situées sur la face frontale, sur la face arrière, sur les côtés latéraux et/ou de manière centrale au niveau du corps creux profilé 2.

Ainsi, le corps 2 représenté sur la figure 7 peut être monté avec ses chambres 3 pleines situées sur la face avant ou sur la face arrière du radiateur 1.

Selon une autre caractéristique de l'invention permettant de moduler de manière plus souple encore les propriétés du radiateur 1, il peut aussi être prévu qu'au moins deux chambres distinctes 3, 3' renferment chacune un matériau 5 pulvérulent ou particulaire de remplissage spécifique, dont la nature et/ou la composition est différente du matériau 5 présent dans l'autre ou l'une des autres chambres 3, 3'.

En vue d'augmenter l'échange thermique entre les parois du corps creux profilé 2 et le matériau de remplissage 5, les portions de paroi 2' du ou d'au moins un corps creux profilé 2 délimitant au moins une chambre 3, 3' peuvent présenter sur une zone au moins de leurs faces internes des formations saillantes ou protubérantes 7 telles que des nervures, des ailettes ou analogues (voir figures 4 et 7).

En accord avec une mise en oeuvre pratique et peu coûteuse de l'invention, les corps creux profilés 2 au moins, et éventuellement leur capot ou couvercle, ainsi que l'élément ou les éléments chauffant(s) électrique(s) 4, correspondent aux corps creux profilés 2 et aux éléments chauffants électrique 4 d'un radiateur électrique à fluide caloporteur.

Ainsi, il est possible d'utiliser des constructions déjà existantes d'éléments creux profilés 2, voire d'ensembles [éléments creux profilés 2 + éléments chauffants 4], voire de recycler des radiateurs électriques à fluide caloporteur en remplaçant ledit fluide par le matériau 5, aggloméré ou non.

Enfin, il convient de noter que le radiateur électrique à accumulation contrôlée et maîtrisée selon l'invention peut être aisément fabriqué par simple remplissage des éléments creux profilés 2, par exemple d'un radiateur électrique à fluide caloporteur, avec le matériau 5 sous forme poudreuse, qui est ensuite aggloméré ou non.

La présente invention a également pour objet un procédé de fabrication d'un radiateur 1 du type décrit ci-dessus.

Ce procédé consiste essentiellement à fournir un corps creux profilé métallique 2 comportant au moins une chambre interne allongée 3, 3', à obturer l'une des extrémités dudit corps creux 1, par une pièce 8 formant capot ou couvercle, puis à remplir la ou l'une au moins desdites chambres 3 avec un matériau 5 pulvérulent ou particulaire à capacité calorique élevée, à base de sable siliceux, poudre de gypse, poudre de talc, poudre de roche ultramafique ou de mélanges de deux ou plusieurs de ces matériaux, préférentiellement à base de sable siliceux ou de poudre de roche ultramafique, à obturer ensuite la seconde extrémité du corps creux profilé 1, à réaliser un lavage et un séchage des faces externes du corps creux profilé 2, à appliquer au moins un revêtement de finition sur lesdites faces externes, à former éventuellement un arrangement d'au moins deux corps creux profilés 2 remplis, obturés et revêtus, et, enfin, à mettre en place un ou plusieurs élément(s) chauffant(s) 4 sur le ou chaque corps creux profilé 2 faisant partie du radiateur 1.

Eventuellement, chaque chambre 3 peut être fermée par un capot 8 individuel.

Le remplissage pourra éventuellement être optimisé en soumettant le ou chaque élément creux profilé à des vibrations ou à des chocs légers répétés, durant la phase de remplissage.

En vue d'augmenter éventuellement la densité du matériau de remplissage 5 présent dans la ou les chambre(s) 3 de chaque corps creux profilé 2, ce dernier peut, de manière alternative ou en plus de sa soumission à des vibrations, être soumis à une aspiration sous vide durant la phase de remplissage.

Selon une première variante, le matériau 5 peut être composé exclusivement de particules à capacité calorique élevée.

Selon une variante de réalisation préférée toutefois, il peut être prévu de fournir un matériau pulvérulent ou particulaire de remplissage 5 intégrant également un liant sous forme liquide ou particulaire, par exemple sous forme de déchets ou de surplus du revêtement de finition des faces externes du ou des corps creux 2 (peinture intégrant des particules ou une composante thermodurcissable ou thermoréticulable), ainsi qu'éventuellement un additif favorisant la conduction thermique, mélangé de manière homogène avec les grains ou particules à capacité de stockage calorique élevée.

Dans le contexte de cette variante, chaque corps creux profilé 2 est soumis, après remplissage et obturation, à un traitement thermique provoquant une activation et/ou une fusion du liant et résultant en une agglomération des grains ou particules à capacité thermique élevée de manière à former avec le liant, et éventuellement le ou les additif(s), un matériau composite à constitution monolithique.

De manière avantageuse, le traitement thermique est réalisé durant la phase de séchage du revêtement de finition, en soumettant le ou chaque élément creux profilé 2 à des conditions thermiques adéquates.

Ainsi, en intégrant en faible quantité un liant liquide ou granulaire adéquat dans le matériau de remplissage 5, il est possible de reconstituer par réagglomération par le biais d'un traitement thermique ou après une phase de consolidation (par évaporation, réticulation, ...), la roche ou pierre d'origine à l'intérieur du radiateur 1, à savoir la roche ou pierre à partir de laquelle avait été obtenus les grains et particules à pouvoir calorique élevé.

En particulier lorsque le liant est une substance particulaire à base de matériau thermodurcissable ou thermoplastique, le traitement thermique peut consister par exemple en un chauffage de 180° C à 220° C environ, voire plus, pendant une durée jusqu'à environ 1 heure 30, ce en fonction du degré de réagglomération recherché et de la nature du liant intégré.

Lorsque le liant est constitué par des déchets ou rebuts du revêtement de finition extérieure, les conditions thermiques de la phase de séchage seront automatiquement adaptées à l'activation du liant.

Le taux de présence du liant peut varier en fonction du degré de réagglomération et de la densité du matériau aggloméré recherchés, le même critère s'appliquant à l'éventuel additif destiné à améliorer les capacités caloriques et thermiques du matériau de remplissage 5.

A titre d'exemple, la présence pondérale du liant dans le mélange destiné à former le matériau de remplissage 5 aggloméré peut être comprise entre 5 % et 25 %, préférentiellement entre 5 % et 15 %, et la présence pondérale de l'additif peut être comprise entre 1 % et 30 %, préférentiellement entre 1 % et 10 %.

Par l'agglomération intime et le remplissage au moins partiel par le liant des interstices entre les particules à capacité calorique élevée, on aboutit à un noyau de radiateur solide et de composition homogène, formé d'un matériau naturel massif reconstitué, épousant intimement les contours du volume interne et en contact surfacique maximal avec les parois du ou des corps creux profilés 2, optimisant l'échange thermique avec l'extérieur.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Radiateur électrique (1) à accumulation, destiné au chauffage du local dans lequel il est disposé et comprenant, d'une part, au moins un corps creux profilé métallique (2) définissant au moins une chambre interne (3) allongée et, d'autre part, au moins un élément chauffant électrique (4) en contact intime avec une portion de paroi (2') dudit corps creux (2), sur une surface extérieure de ce dernier par rapport à la ou aux chambres (3), radiateur (1) **caractérisé en ce que** la chambre (3) ou au moins l'une des chambres (3, 3') du ou de chaque corps creux profilé (2) renferme, en étant préférentiellement entièrement remplie, un matériau (5) pulvérulent ou particulaire, à capacité calorifique élevée, choisi dans le groupe formé par le sable siliceux, la poudre de gypse, la poudre de talc, la poudre d'une roche ultramafique et les mélanges de ces matériaux.

2. Radiateur selon la revendication 1, **caractérisé en ce que** le corps creux profilé (2) est réalisé en aluminium ou en un alliage d'aluminium et **en ce que** le matériau (5) pulvérulent ou particulaire de remplissage est à base de sable siliceux ou de poudre de stéatite ou pierre ollaire, le cas échéant formé uniquement ou majoritairement de poudre de stéatite ou de sable siliceux.

3. Radiateur selon la revendication 1 ou 2, **caractérisé en ce que** les grains ou particules du matériau (5) de remplissage sont agglomérées entre eux ou elles au moyen d'un liant, de manière à former une structure de remplissage sensiblement monolithique dans la ou chaque chambre (3, 3') du ou de chaque corps creux profilé (2).

4. Radiateur selon la revendication 3, **caractérisé en ce que** le matériau de remplissage aggloméré (5) présente une composition homogène et une densité proche ou équivalente à celle de la roche naturelle dont proviennent les particules ou grains à capacité calorique élevée et **en ce que** le liant conserve une structure rigide au moins dans les plages de températures de fonctionnement du radiateur (1).

5. Radiateur selon l'une quelconque des revendications 3 et 4, **caractérisé en ce que** le liant est un polymère thermodurcissable ou thermoplastique et est choisi dans le groupe formé par les polyesters, les polyoléfines, les polyuréthanes et les époxydes.

6. Radiateur selon l'une quelconque des revendications 1 à 5, **caractérisé en ce que** le matériau (5) de remplissage, aggloméré ou non, intègre au moins un additif améliorant la conduction thermique sous la forme de particules ou de fibres métalliques, préférentiellement en un matériau identique au matériau métallique formant le ou chaque corps creux profilé (2).

7. Radiateur selon l'une quelconque des revendications 1 à 6, **caractérisé en ce qu'**il est constitué par un arrangement de plusieurs corps creux profilés (2), éventuellement assemblés par paires, dont les deux extrémités sont fermées par des capots ou des couvercles et **en ce que** l'élément chauffant commun ou chaque élément chauffant (4) réalise un chauffage surfacique au niveau des faces extérieures de certaines portions de paroi (2') des corps creux profilés (2), préférentiellement au niveau des faces arrières (2") desdits corps creux profilés (2), opposées aux faces des corps (2) tournées vers le local à chauffer.

8. Radiateur selon l'une quelconque des revendications 1 à 7, **caractérisé en ce que** l'élément chauffant commun (4) ou chaque élément chauffant (4) consiste en des bandelettes à résistances chauffantes intégrées (4'), préférentiellement en matériau silicone et vulcanisées sur des portions de paroi (2') des corps creux profilés (2) et **en ce que** les faces arrières (2") des corps creux profilés (2) sont pourvues d'ailettes (6) orientées verticalement et entre lesquelles s'étendent lesdites bandelettes chauffantes (4) en étant en application intime contre les parois desdites faces (2").

9. Radiateur selon l'une quelconque des revendications 1 à 7, **caractérisé en ce que** chaque élément chauffant (4) associé à un corps creux (2) consiste en un corps chauffant surfacique, par exemple une plaque ou une bande de matériau, isolant électrique et conducteur thermique, intégrant des résistances chauffantes (4'), prise en sandwich avec contact intime respectif entre la face extérieure d'une ou de la portion de paroi arrière (2') dudit corps creux (2) considéré et une plaque de diffusion thermique (6') pourvue d'ailettes (6).

10. Radiateur selon l'une quelconque des revendications 1 à 9, **caractérisé en ce que** chaque corps creux profilé (2) comporte plusieurs chambres (3 et 3') situées à des distances différentes des faces avant et arrière dudit corps creux profilé (2), et éventuellement de formes et/ou de tailles différentes, à savoir au moins une chambre (3) périphérique délimitée partiellement par les portions de paroi (2') du corps creux profilé (2) définissant les faces extérieures de ce dernier, notamment avant et arrière, et au moins une chambre (3') interne séparée desdites faces extérieures, et notamment de la ou des portions de paroi (2') en contact avec l'élément ou un élément chauffant (4), par au moins une autre chambre (3).

11. Radiateur selon la revendication 10, **caractérisé en ce que** toutes les chambres (3, 3') sont remplies, sensiblement en totalité, par le matériau (5) pulvérulent ou particulaire de remplissage, le cas échéant aggloméré.

12. Radiateur selon la revendication 10, **caractérisé en ce que** seules une ou certaines des chambres (3, 3') sont remplies, sensiblement en totalité, par le matériau (5) pulvérulent ou particulaire de remplissage, le cas échéant aggloméré, les autres étant vides ou renfermant un autre matériau de remplissage.

13. Radiateur selon les revendications 10 à 12, **caractérisé en ce qu'**au moins deux chambres distinctes (3, 3') renferment chacune un matériau (5) pulvérulent ou particulaire de remplissage spécifique, aggloméré ou non, dont la nature et/ou la composition est différente du matériau (5) présent dans l'autre ou l'une des autres chambres (3, 3').

14. Radiateur selon l'une quelconque des revendications 1 à 13, **caractérisé en ce que** les portions de paroi (2') du ou d'au moins un corps creux profilé (2) délimitant au moins une chambre (3, 3') présentent sur une zone au moins de leurs faces internes des formations saillantes ou protubérantes (7) telles que des nervures, des ailettes ou analogues.

15. Radiateur selon l'une quelconque des revendications 1 à 14, **caractérisé en ce que** les corps creux profilés (2) au moins, et éventuellement leur capot ou couvercle, ainsi que l'élément ou les éléments chauffants électriques (4), correspondent aux corps creux profilés (2) et aux éléments chauffants électrique (4) d'un radiateur électrique à fluide caloporteur.

16. Procédé de fabrication d'un radiateur selon l'une quelconque des revendications 1à 15, **caractérisé en ce qu'**il consiste essentiellement à fournir un corps creux profilé métallique (2) comportant au moins une chambre interne allongée (3, 3'), à obturer l'une des extrémités dudit corps creux (1), par une pièce (8) formant capot ou couvercle, puis à remplir la ou l'une au moins desdites chambres (3) avec un matériau (5) pulvérulent ou particulaire à capacité calorique élevée, à base de sable siliceux, poudre de gypse, poudre de talc, poudre de roche ultramafique ou de mélanges de deux ou plusieurs de ces matériaux, préférentiellement à base de sable siliceux ou de poudre de roche ultramafique, à obturer ensuite la seconde extrémité du corps creux profilé (1), à réaliser un lavage et un séchage des faces externes du corps creux profilé (2), à appliquer au moins un revêtement de finition sur lesdites faces externes, à former éventuellement un arrangement d'au moins deux corps creux profilés (2) remplis, obturés et revêtus, et, enfin, à mettre en place un ou plusieurs éléments chauffants (4) sur le ou chaque corps creux profilé (2) faisant partie du radiateur (1).

17. Procédé selon la revendication 16, **caractérisé en ce que** le ou chaque corps creux profilé (2) est soumis à des vibrations durant la phase de remplissage et/ou à une aspiration sous vide durant la phase de remplissage.

18. Procédé selon l'une quelconque des revendications 16 et 17, **caractérisé en ce qu'**il consiste à fournir un matériau pulvérulent ou particulaire de remplissage (5) intégrant également un liant sous forme liquide ou particulaire, par exemple sous forme de déchets ou de surplus du revêtement de finition des faces externes du ou des corps creux (2), ainsi qu'éventuellement un additif favorisant la conduction thermique, mélangé de manière homogène avec les grains ou particules à capacité de stockage calorique élevée.

19. Procédé selon la revendication 18, **caractérisé en ce que** chaque corps creux profilé (2) est soumis, après remplissage et obturation, à un traitement thermique provoquant une activation et/ou une fusion du liant et résultant en une agglomération des grains ou particules à capacité thermique élevée de manière à former avec le liant, et éventuellement le ou les additif(s), un matériau composite à constitution monolithique.

20. Procédé selon la revendication 19, **caractérisé en ce que** le traitement thermique est réalisé durant la phase de séchage du revêtement de finition, en soumettant le ou chaque élément creux profilé (2) à des conditions thermiques adéquates.
